# FASCICULE DE BREVET EUROPEEN

(11) **EP 3 137 289 B1**
(45) Date de publication et mention de la délivrance du brevet: **14.07.2021**
(21) Numéro de dépôt: 15718499.5
(22) Date de dépôt: 28.04.2015
(51) Int. Cl.: B29D 30/06

(54) **ELEMENT DE MOULE POUR MOULE DE PNEUMATIQUE COMPORTANT UN MARQUAGE**
FORMELEMENT MIT MARKIERUNGSEIGENSCHAFTEN FÜR EINE REIFENFORM
TIRE MOULD MOULDING ELEMENT COMPRISING MARKING FEATURES

(30) Priorité: 30.04.2014 FR 1453986
(43) Date de publication de la demande: 08.03.2017
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR); DESVIGNES, Jean-Claude, F-63040 Clermont-Ferrand Cedex 9 (FR)
(74) Mandataire: Lasson, Cédric Yves
(86) Numéro de dépôt international: PCT/EP2015/059121
(87) Numéro de publication internationale: WO 2015/165862

(56) Documents cités:
- WO-A1-2009/007790
- DE-A1-102004 010 060
- US-A- 1 567 402
- US-A- 2 296 016
- US-A- 4 444 713
- US-A1- 2009 218 019
- US-B1- 7 883 326
- None

## Description

### DOMAINE DE L'INVENTION

La présente invention concerne un élément de moule pour moule de pneumatique comportant un marquage, ledit moule comportant une coquille destinée à mouler le flanc du pneumatique.

Elle concerne également un moule pour pneumatique dans lequel est monté ledit élément de moule.

Elle concerne enfin un procédé de fabrication dudit élément de moule pour moule de pneumatique.

### ETAT DE LA TECHNIQUE

Il est connu du document EP1636117 d'utiliser un symbole matriciel codé sur le flanc d'un pneumatique, ledit symbole matriciel codé comportant des informations telles qu'un numéro de série individuel pour ledit pneumatique, le site internet du constructeur du pneumatique, etc. Un symbole matriciel codé comporte des parties sombres et des parties claires et est gravé directement sur le flanc du pneumatique, après que ce dernier est passé par toutes les phases de fabrication et par tous les tests de conformité. Après fabrication, chaque pneumatique est placé sur une ligne dédiée de fabrication de symboles matriciels codés qui effectue différentes étapes dont en particulier le positionnement du pneumatique sur la ligne de fabrication, la lecture d'une référence de position sur le pneumatique, l'alignement du pneumatique avec un laser en fonction de la référence de position, le marquage par gravure au laser du symbole matriciel codé.

US-A-2009218019 discloses a further known prior art.

Un inconvénient de cet état de la technique réside dans le fait que la ligne de fabrication dédiée de gravure au laser est complexe à mettre en œuvre et également coûteuse. Par ailleurs, lorsque le pneumatique s'use, le symbole matriciel codé devient moins lisible.

Il existe aujourd'hui un besoin pour améliorer la lisibilité des symboles matriciels codés présents sur les flancs de pneumatique en vue d'améliorer leur lecture tout en rendant plus performant la fabrication du marquage desdits symboles matriciels codés.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « symbole matriciel codé », on entend un code dit « intelligent » où les données sont encodées en deux dimensions (sous la forme d'une pluralité de rangées et de colonnes), les données étant décodables par un imageur d'une machine, tel qu'un téléphone portable. Un symbole matriciel codé encode un volume nettement plus important de données pour une même surface donnée qu'un code barre linéaire traditionnel et comporte un système intégré de correction d'erreurs.

Par « bande de roulement» d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « texture », on entend un agencement organisé d'une pluralité d'éléments, tout ou partie des éléments de l'agencement étant la répétition d'un même élément de base, par exemple, un brin ou une lamelle.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

Par « texture venue de matière avec un flanc », on entend que la texture est dans le même matériau caoutchoutique que le flanc du pneumatique. On obtient ainsi une texture sans ajout d'un autre matériau.

### RESUME DE L'INVENTION

L'invention concerne un élément de moule pour moule de pneumatique comportant un marquage, ledit moule comportant une coquille destinée à mouler le flanc du pneumatique. Ledit élément de moule est une plaquette amovible destinée à être montée dans un logement de ladite coquille, et ledit marquage est destiné à mouler sur ledit pneumatique un symbole matriciel codé faisant contraste avec le flanc du pneumatique, ledit marquage comportant un premier ensemble de cavités ou de protubérances adapté pour mouler des parties sombres du symbole matriciel codé. Les cavités du premier ensemble de cavités ont une forme conique et sont réparties dans le marquage selon une densité au moins égale à un cône par millimètre carré (mm²), chaque cône ayant une section moyenne comprise entre 0,0005 mm² et 1 mm², permettant de réaliser des éléments en protubérance par rapport à la surface du flanc qui ont une forme de brin, ou ont une forme de stries sensiblement parallèles entre elles, le pas des stries étant au plus égal à 0,5 mm, chaque strie ayant une largeur moyenne comprise entre 0,02 mm et 0,25 mm, permettant de réaliser des éléments en protubérance par rapport à la surface du flanc qui ont une forme de lamelles. Le marquage comporte un deuxième ensemble de protubérances faisant saillie avec ledit élément de moule adapté pour mouler des parties claires du symbole matriciel codé et lesdites protubérances ont la forme de calottes sphériques, chaque élément en protubérance étant interpénétré avec plusieurs éléments en protubérance adjacents. En complément ou solution alternative, le marquage comporte un ensemble de creux adapté pour mouler des parties claires du symbole matriciel codé et lesdits creux ont la forme de calottes sphériques. Ces calottes sphériques sont adaptées pour mouler des éléments en bosse, chaque élément en bosse étant interpénétré avec plusieurs éléments en bosse adjacents.

Ainsi, la réalisation du marquage sur un élément de moule va permettre de produire un symbole matriciel codé sur le flanc du pneumatique lors de la fabrication dudit pneumatique. Il n'est plus nécessaire d'avoir une ligne de fabrication dédiée. Par ailleurs, le marquage permet de réaliser un symbole matriciel codé comportant les parties sombres du symbole matriciel codé fortement en contraste par rapport au reste du flanc du pneumatique et également par rapport aux parties claires dudit symbole. La lecture du symbole matriciel codé est ainsi améliorée.

Selon des modes de réalisation non limitatifs, le pneumatique, peut comporter en outre une ou plusieurs caractéristiques supplémentaires parmi les suivantes.

Dans un mode de réalisation non limitatif, ledit élément de moule comporte un deuxième ensemble de cavités adapté pour mouler une zone de délimitation du symbole matriciel codé.

Cela permet de réaliser une zone de texture venue de matière avec le flanc et faisant contraste avec le reste du pneumatique.

Dans un mode de réalisation non limitatif, les protubérances du premier ensemble de protubérances ont une forme conique et sont réparties dans le marquage selon une densité au moins égale à une protubérance par millimètre carré (mm²), ces protubérances présentant des diamètres équivalents compris entre 0,01 mm et 1,2 mm.

Cela permet de réaliser des éléments en creux par rapport à la surface du flanc.

Il est également proposé un moule pour pneumatique comportant une coquille destinée à mouler le flanc du pneumatique, ladite coquille comportant un logement dans lequel est monté un élément de moule selon l'une quelconque des caractéristiques précédentes.

Il est également proposé un procédé de fabrication d'un élément de moule pour moule de pneumatique, ledit moule comportant une coquille destinée à mouler le flanc du pneumatique, ledit élément de moule étant une plaquette amovible destinée à être montée dans un logement de ladite coquille et comportant un marquage, ledit procédé comportant :
- l'extraction dudit élément de moule à partir d'une plaque d'aluminium ;
- la réalisation du marquage destiné à mouler sur le pneumatique un symbole matriciel codé faisant contraste avec le flanc du pneumatique, ledit symbole matriciel codé comportant des parties sombres et des parties claires, la réalisation dudit marquage comprenant :
   - la réalisation du marquage adapté pour mouler les parties claires du symbole matriciel codé dans ledit élément de moule ; et
- la réalisation du marquage adapté pour mouler les parties sombres du symbole matriciel codé dans ledit élément de moule.

La réalisation du marquage adapté pour mouler les parties claires du symbole matriciel codé s'effectue :
- par microbillage d'un deuxième ensemble de protubérances faisant saillie avec ledit élément de moule pour former le marquage du symbole matriciel codé de sorte que lesdites protubérances aient la forme de calottes sphériques, chaque élément en protubérance étant interpénétré dans le marquage avec plusieurs éléments en protubérance adjacents, le deuxième ensemble de protubérances étant adapté pour mouler lesdites parties claires du symbole matriciel codé ; ou
- par moulage d'un ensemble de creux ayant la forme de calotte sphérique, ledit ensemble de creux étant adapté pour mouler lesdites parties claires du symbole matriciel codé.
La réalisation du marquage adapté pour mouler les parties sombres du symbole matriciel codé dans ledit élément de moule est effectuée en réalisant un premier ensemble de cavités ou de protubérances dans ledit élément de moule adapté pour mouler lesdites parties sombres du symbole matriciel codé, la réalisation du premier ensemble de cavités dans ledit élément de moule étant effectuée par gravure au laser et la réalisation du premier ensemble de protubérances dans ledit élément de moule étant effectuée par moulage.

Dans un mode de réalisation non limitatif, les étapes de réalisation du marquage adapté pour mouler les parties claires et les parties sombres du symbole matriciel codé dans ledit élément de moule sont effectuées simultanément par emboutissage dudit élément de moule.

Dans un mode de réalisation non limitatif, la réalisation du marquage adapté pour mouler les parties claires du symbole matriciel codé dans ledit élément de moule s'effectue avant l'extraction dudit élément de moule à partir de la plaque d'aluminium.

Dans un mode de réalisation non limitatif, le microbillage réalise des microbilles de diamètre compris entre 10µm et 200µm.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
la **figure 1** représente schématiquement une coupe radiale d'un moule comportant un élément de moule conforme à l'invention selon un mode de réalisation non limitatif ;
la **figure 2** représente schématiquement une vue en perspective de l'élément de moule de la **figure 1** comportant un marquage correspondant au négatif d'un symbole matriciel codé selon un mode de réalisation non limitatif ;
la **figure 3** représente schématiquement une vue en perspective d'une partie d'un pneumatique comportant un flanc dans lequel est disposé un symbole matriciel codé réalisé au moyen de l'élément de moule de la **figure 2** **;**
la **figure 4** représente un symbole matriciel codé du flanc de la **figure 3** selon un mode de réalisation non limitatif, le symbole matriciel codé comprenant des parties sombres et des parties claires, les parties sombres étant composées d'une texture particulière ;
la **figure 5** représente le symbole matriciel codé du flanc de la **figure 4** entouré d'une zone de délimitation ;
la **figure 6** représente une vue en coupe d'une partie de l'élément de moule de la **figure 1** qui permet de mouler des parties sombres d'un symbole matriciel codé selon un premier mode de réalisation non limitatif ;
la **figure 7** représente une vue en coupe d'une partie de l'élément de moule de la **figure 1** qui permet de mouler des parties sombres d'un symbole matriciel codé selon un deuxième mode de réalisation non limitatif ;
la **figure 8** représente une partie de la texture composant des parties sombres d'un symbole matriciel codé obtenues par l'élément de moule de la **figure 6** **;**
la **figure 9** représente une partie de la texture composant des parties sombres du symbole matriciel codé obtenues par l'élément de moule de la **figure 6** ;
la **figure 10** représente une vue en coupe d'une partie de l'élément de moule de

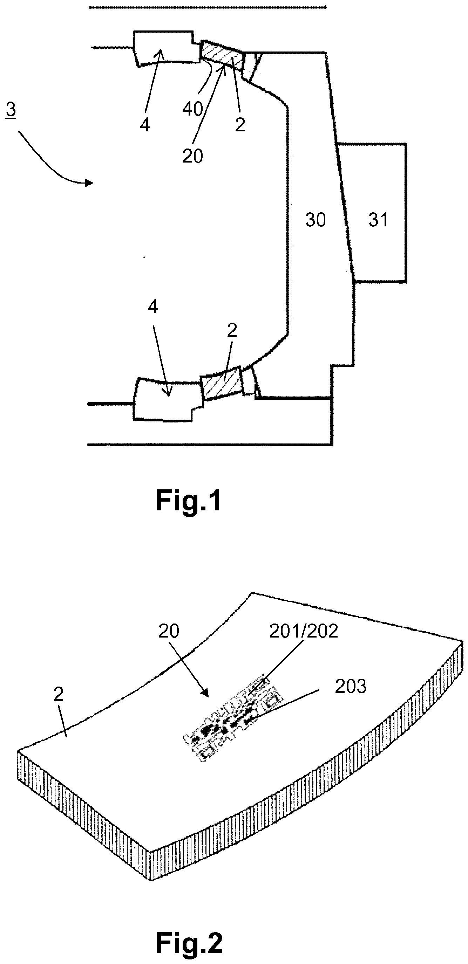

la **figure 1** qui permet de mouler des parties sombres d'un symbole matriciel codé selon un troisième mode de réalisation non limitatif ;

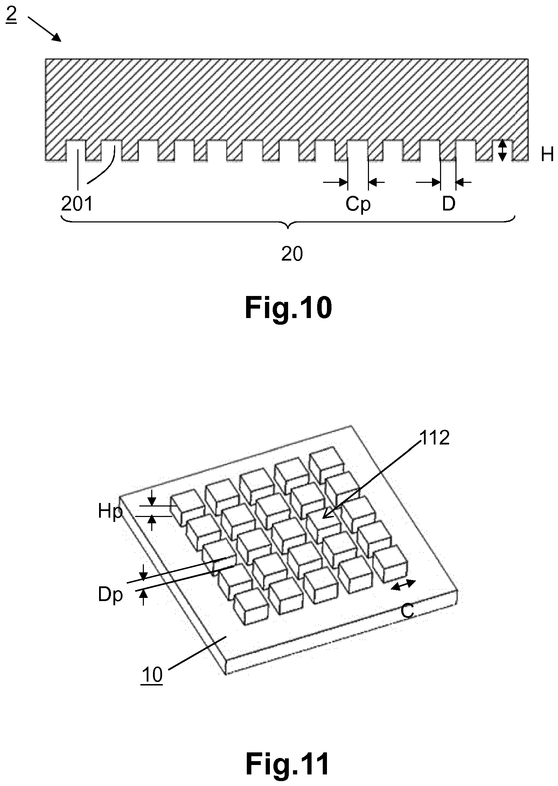

la **figure 11** représente une partie de la texture composant des parties sombres du symbole matriciel codé obtenues par l'élément de moule de la **figure 10** ;

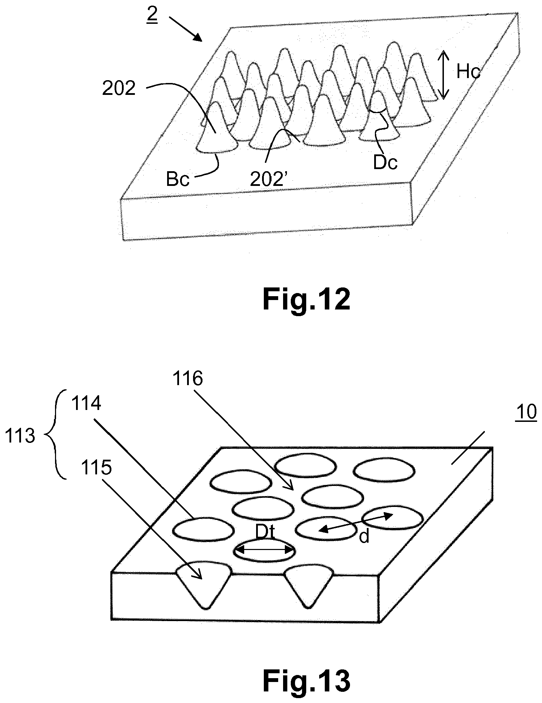

la **figure 12** représente une vue en coupe d'une partie de l'élément de moule de la **figure 1** qui permet de mouler des parties sombres d'un symbole matriciel codé selon un quatrième mode de réalisation non limitatif ;
la **figure 13** représente une partie de la texture composant des parties sombres du symbole matriciel codé obtenues par l'élément de moule de la **figure 12** ;

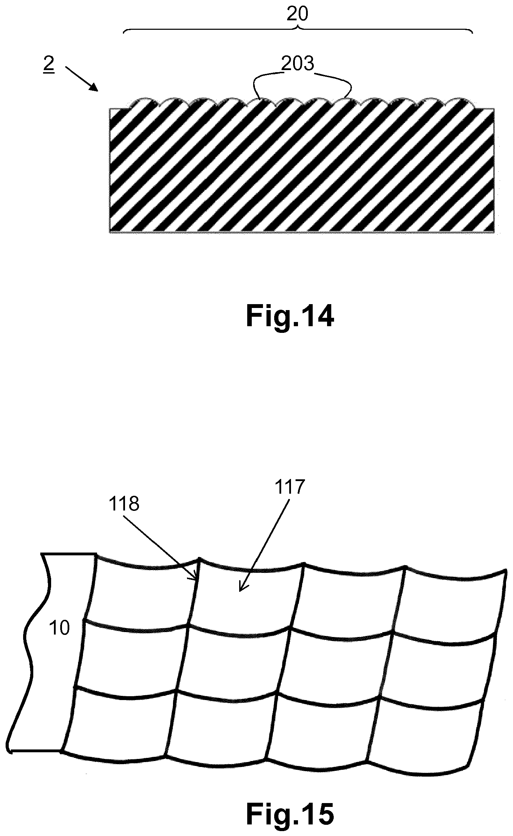

la **figure 14** représente une vue en coupe d'une partie de l'élément de moule de la **figure 1** qui permet de mouler des parties claires d'un symbole matriciel codé selon un premier mode de réalisation non limitatif ;
la **figure 15** est une représentation en perspective d'une pluralité d'éléments en creux d'un motif composant des parties claires du symbole matriciel codé obtenues par l'élément de moule de la **figure 14** **;**

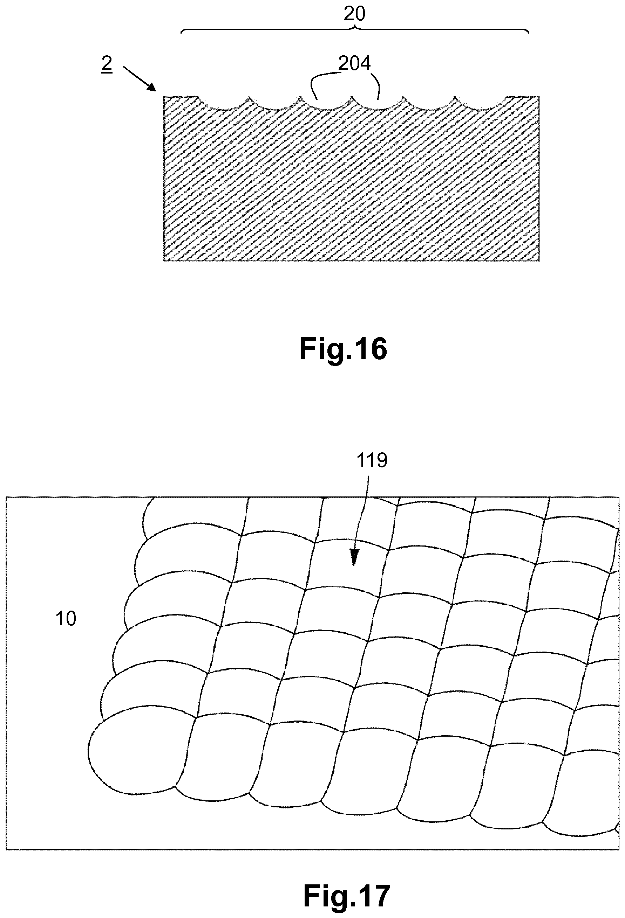

la **figure 16** représente une vue en coupe d'une partie de l'élément de moule de la **figure 1** qui permet de mouler des parties claires d'un symbole matriciel codé selon un deuxième mode de réalisation non limitatif ;
la **figure 17** est une représentation en perspective d'une pluralité d'éléments en creux d'un motif composant des parties claires du symbole matriciel codé obtenues par l'élément de moule de la **figure 16** ;

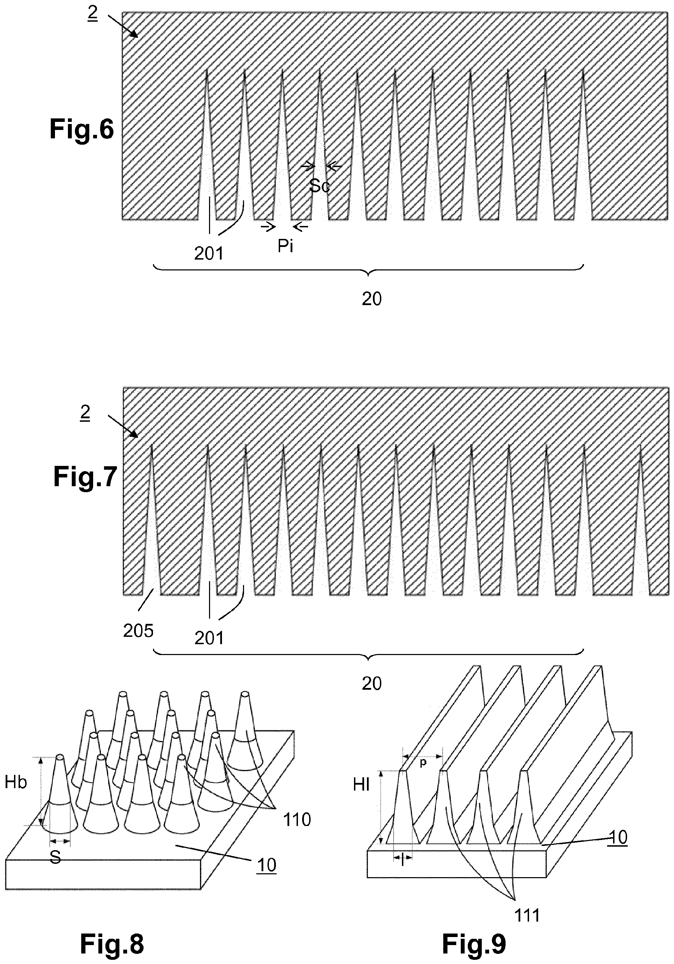

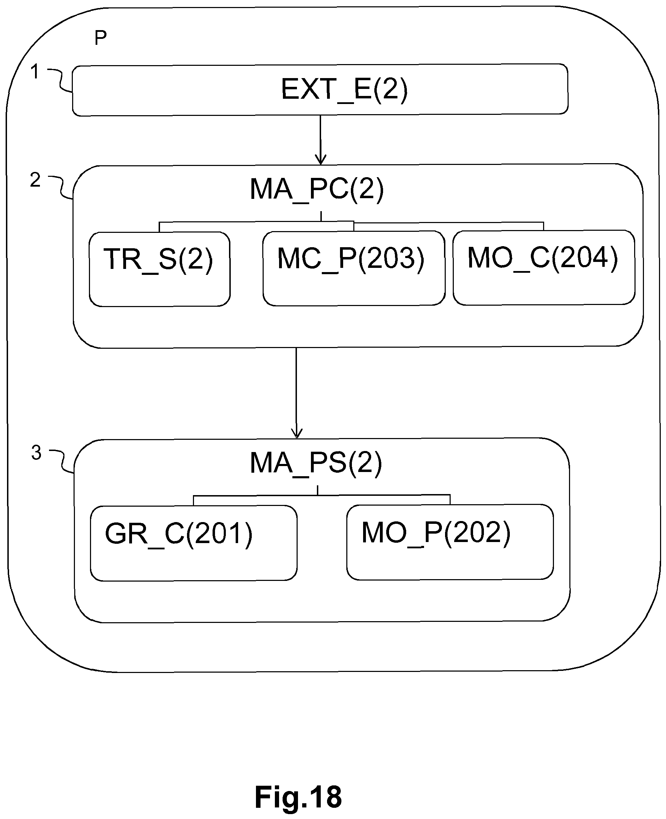

la **figure 18** est un organigramme d'un procédé de fabrication d'un élément de moule des **figures 6, 7****,** **10****,** **12****,** **14****,** **16** selon un mode de réalisation non limitatif.

Dans la description qui va suivre, des éléments sensiblement identiques ou similaires seront désignés par des références identiques.

La **figure 1** illustre un moule 3 comprenant :
- une coquille 4 destinée à mouler le flanc 10 d'un pneumatique 1, ladite coquille comportant un logement 40 dans lequel est monté un élément de moule 2 ;
- un secteur 30 maintenu fermé par une frette conique 31 ;
- un élément de moule 2 comportant un marquage 20.

L'élément de moule 2 est une plaquette amovible destinée à être montée dans le logement 40 de la coquille 4. Dans un mode de réalisation non limitatif, ladite plaquette 2 est en aluminium. Cela permet d'avoir une plaquette amovible ductile et cela facilite donc la réalisation du marquage dans la plaquette 2. Le marquage 20 est destiné à mouler sur le pneumatique un symbole matriciel codé 5 faisant contraste avec le flanc du pneumatique. Le marquage 20 correspond donc au négatif du symbole matriciel codé 5 à inscrire sur le pneumatique.

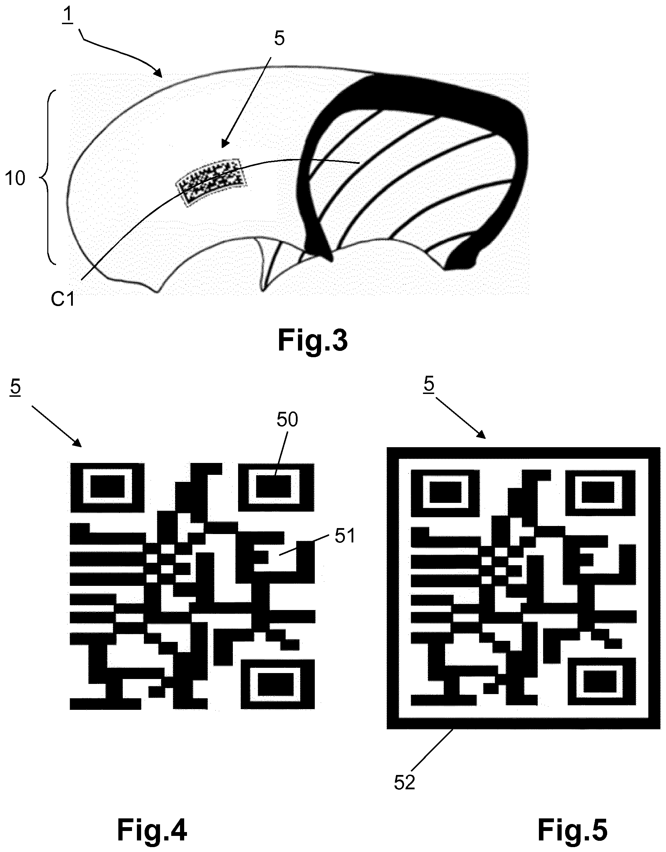

La **figure 2** illustre un exemple non limitatif d'un élément de moule 2 comportant un tel marquage 20. On notera que la plaquette amovible 2 est légèrement incurvée de manière à épouser la forme du moule 3. En conséquence le symbole matriciel codé 5 qui en résulte va suivre la courbure C1 du flanc du pneumatique 1, ladite courbure C1 (illustrée à la figure 3) étant définie selon un parallèle par rapport à l'axe de rotation du pneumatique. Autrement dit, le symbole matriciel codé 5 sera courbé autour de l'axe de rotation du pneumatique 1. Cela donnera un aspect plus esthétique au pneumatique puisque le symbole matriciel codé 5 apparaîtra comme faisant partie intégrante du flanc 10. Par ailleurs, dans un mode de réalisation non limitatif, le marquage 20 est rectangulaire et orienté dans le sens de la plaquette 2 comme illustré sur la figure 2. Le symbole matriciel codé 5 qui en résulte sera ainsi de forme rectangulaire.

Tel qu'illustré sur la **figure 2****,** le marquage 20 comporte un premier ensemble de cavités 201 ou de protubérances 202 adapté pour mouler les parties sombres 50 du symbole matriciel codé 5. Par ailleurs, le marquage 20 comporte un deuxième ensemble de protubérances 203 faisant saillie avec ladite plaquette 2 et adapté pour mouler les à des parties claires 51 du symbole matriciel codé 5.

La **figure 3** illustre le flanc 10 d'un pneumatique 1, ledit flanc 10 comprenant un symbole matriciel codé 5 obtenu à l'aide du marquage 20 de l'élément de moule 2.

On notera que dans des modes de réalisation non limitatifs, le symbole matriciel codé 5 est sélectionné parmi les symboles suivants :
- un datamatrix™ ;
- un QR™ ;
- un QR code™ ;
- un MaxiCode™ ;
- un PDF-417™ ;
- un code 16K™ ;
- un code 49™ ;
- un code Aztec™, ou tout autre symbole matriciel codé.
On rappelle qu'un symbole matriciel codé 5 permet d'encoder des informations telles que la marque du constructeur, le site internet du constructeur etc. Grâce à des moyens de lecture/décodage tels qu'un imageur intégré dans un exemple non limitatif dans un téléphone portable, un observateur du pneumatique va pouvoir lire et décoder le symbole matriciel codé 5 et accéder au site internet du constructeur, par exemple pour commander un nouveau pneumatique.

Sur la **figure 4** est représenté un premier mode de réalisation non limitatif de symbole matriciel codé 5. Comme on peut le voir sur la figure, le symbole matriciel codé 5 comporte des parties sombres 50 et des parties claires 51. De façon connue de l'homme du métier, dans un mode de réalisation non limitatif, les parties sombres 50 et claires 51 sont des cases sombres, respectivement des cases claires, une partie correspondant à une case. Le symbole matriciel codé 5 comporte ainsi des colonnes et des rangées de cases (ou carrés). Dans un mode de réalisation non limitatif, une case comporte une taille comprise entre 0,5x0,5mm à 2x2mm. Au-delà, le symbole matriciel codé 5 devient trop intrusif ou est bien trop miniaturisé et donc trop fragile pour être décodé en fin d'usure du pneumatique 1. Dans une variante de réalisation non limitative, une case comporte une taille de 1x1mm. Dans un autre mode de réalisation non limitatif, les parties sombres 50 et claires 51 sont des ronds sombres, respectivement des ronds clairs. Dans un autre mode de réalisation non limitatif, on peut avoir une combinaison de cases et de ronds.

Les parties sombres 50 sont composées d'une texture venue de matière avec ledit flanc 10. La texture fait contraste avec le reste du pneumatique 1 et notamment le reste du flanc 10 du pneumatique 1 de sorte que le symbole matriciel codé 5 soit bien visible sur le flanc 10 par un observateur du pneumatique.

Sur la **figure 5** est représenté un deuxième mode de réalisation non limitatif de symbole matriciel codé 5. Comme on peut le voir sur la figure, outre les parties sombres 50 et les parties claires 51, le symbole matriciel codé 5 est entouré d'une zone de texture (ou de délimitation) 52 venue de matière avec le flanc et faisant contraste avec le reste du pneumatique 1. Dans un mode de réalisation non limitatif, cette zone 52 fait au moins 2mm de largeur Ld. Cette zone de délimitation 52 ne touche pas les zones sombres 50 du symbole matriciel codé 4. Elle est composée de la même texture de type « velours » (décrite dans la suite de la description) que les parties sombres 50, de sorte que la quantité de surface noire dans la zone de prise de vue autour du symbole matriciel codé 5 est augmentée.

Ainsi, en augmentant ainsi la quantité de surface noire, on augmente le contraste entre les régions claires et sombres du symbole matriciel 5 dans le traitement réalisé par le téléphone portable. On améliore par conséquent la lecture/décodage du symbole 5.

Les parties sombres 50, les parties claires 51 et la zone de délimitation 52 du symbole matriciel codé 5 sont réalisées à l'aide de l'élément de moule 2 selon des modes de réalisation non limitatifs présentés dans la suite de la description.

Les parties sombres 50 du symbole matriciel codé 4 sont réalisées de la manière suivante.

Comme expliqué précédemment, le marquage 20 de la plaquette amovible 2 comporte un premier ensemble de cavités 201 ou de protubérances 202 adapté pour mouler les parties sombres 50 du symbole matriciel codé 5.

Le premier ensemble de cavités 201 présente différentes formes présentées ci-après, pour réaliser les parties sombres 50 selon différentes formes.

Les cavités 201 correspondent au négatif des parties sombres 50. Autrement dit, une pluralité de cavités 201 correspond au négatif d'une case sombre 50.

Tel qu'illustré sur la **figure 6****,** dans un premier mode de réalisation non limitatif, les cavités du premier ensemble de cavités 201 ont une forme conique et sont réparties dans le marquage 20 selon une densité au moins égale à un cône par millimètre carré mm², chaque cône 201 ayant une section moyenne Sc comprise entre 0,0005 mm² et 1 mm².

Cela permet de réaliser une texture formant les parties sombres 50 qui comporte une pluralité d'éléments en protubérance par rapport à la surface du flanc 10 qui sont en forme de brins 110 tel qu'illustré sur la **figure 8****.** Dans cette figure, les brins 110 ont une forme globalement conique avec une section diminuant dans la hauteur Hb de ces brins. Plus particulièrement, la section moyenne de chaque brin, correspondant à la moyenne des sections S mesurées à intervalles réguliers depuis la base du brin, est comprise entre 0,0005 mm² et 1 mm². Dans la texture, les brins sont répartis selon une densité au moins égale à un brin par millimètre carré.

Tel qu'illustré sur la **figure 6** également, dans un deuxième mode de réalisation non limitatif, les cavités du premier ensemble de cavités 201 ont une forme de stries sensiblement parallèles entre elles, le pas Pi des stries étant au moins égal à 0,05 mm et au plus égal à 0,5 mm, chaque strie 201 ayant une largeur moyenne comprise entre 0,02 mm et 0,25 mm.

Cela permet de réaliser une texture formant les parties sombres 50 qui comporte une pluralité d'éléments en protubérance par rapport à la surface du flanc 10 qui sont en forme de lamelles 111 tel qu'illustré sur la **figure 9****.** Dans cette figure, les lamelles 111 présentent une section globalement triangulaire et la largeur moyenne de chaque lamelle, correspondant à la moyenne des largeurs 1 mesurées à intervalles réguliers dans la hauteur Hl de la lamelle, est comprise entre 0,02 mm et 0,25 mm. Dans la texture, les lamelles 111 sont sensiblement parallèles entre elles et le pas P des lamelles est au moins égal à 0,05 mm et au plus égal à 0,5 mm.

Dans un autre mode de réalisation, les cavités du premier ensemble de cavités 201 présentent une combinaison de cônes et de stries de sorte à réaliser une texture formant les parties sombres 50 qui comporte une combinaison de brins 110 et de lamelles 111.

Tel qu'illustré sur la **figure 7****,** dans un mode de réalisation non limitatif, l'élément de moule 2 comporte un deuxième ensemble de cavités 205 adapté pour mouler la zone de délimitation 52 du symbole matriciel codé 5, zone 52 décrite précédemment.

Tel qu'illustré sur la **figure 10****,** dans un troisième mode de réalisation non limitatif, les cavités du premier ensemble de cavités 201 ont une forme de parallélépipèdes de côté Cp compris entre 0,05 mm et 0,5 mm, de profondeur H comprise entre 0,05 mm et 0,5 mm, la distance D entre deux cavités adjacentes dans le marquage 20 étant comprise entre 0,05 mm et 0,5 mm.

Cela permet de réaliser une texture formant les parties sombres 50 qui comporte une pluralité d'éléments en protubérance par rapport à la surface du flanc 10 qui sont en forme de parallélépipèdes 112 tel qu'illustré sur la **figure 11****.** Dans cette figure, les parallélépipèdes 112 présentent un côté C compris entre 0,05 mm et 0,5 mm, une hauteur Hp comprise entre 0,05 mm et 0,5 mm, et une distance Dp entre deux parallélépipèdes adjacents 112 dans la texture comprise entre 0,05 mm et 0,5 mm.

Dans un autre mode de réalisation, les cavités du premier ensemble de cavités 201 présentent une combinaison de cônes, de stries et parallélépipèdes, ou de stries et de parallélépipèdes ou encore de cônes et de parallélépipèdes décrits ci-dessus.

Dans un quatrième mode de réalisation non limitatif non illustré, les cavités du premier ensemble de cavités 201 présentent des formes et des distances entre cavités variables. Cela permet de réaliser des éléments en protubérance de formes variables. Cela crée de l'aléatoire dans la texture formant les parties sombres 50, ce qui permet de rendre moins visible ces éléments.

Ces éléments en protubérance 110 à 112 forment la texture venue de matière avec le flanc 10 et sont donc en matière caoutchoutique. Autrement dit, une case sombre 50 comporte une pluralité d'éléments 110, 111 et/ou 112.
L'effet des éléments en protubérance 110 à 112 est de « piéger » une grande quantité des rayons lumineux incidents qui rencontrent la texture. La texture (appelée « velours ») permet d'obtenir un visuel de type « velours » car les éléments en protubérance absorbent la lumière et rendent ainsi les parties sombres 51 du symbole matriciel codé 5 plus noires. Un observateur du pneumatique distinguera bien ces parties sombres 50 par rapport aux parties claires 51 et au reste du flanc 10. Par ailleurs, la texture est de type « velours » car elle est agréable au toucher.

Après le premier ensemble de cavités 201, le premier ensemble de protubérances 202 du marquage 20 est présenté ci-après selon un mode de réalisation non limitatif tel qu'illustré sur la **figure 12****.** Le marquage 20 comprend une pluralité de protubérances 202 faisant saillie à partir de l'élément de moule 2 et des parties intermédiaires 202' séparant les protubérances 202. Les protubérances 202 ont une forme conique et sont réparties dans le marquage 20 selon une densité au moins égale à une protubérance par millimètre carré (mm²), ces protubérances 202 présentant une base Bc ayant une forme globalement circulaire et présentant un diamètre équivalent Dc compris entre 0,01 mm et 1,2mm. On sélectionne la densité des protubérances et/ou le diamètre équivalent Dc de sorte à ce que les protubérances 202 occupent un certain pourcentage du marquage 20. Dans un exemple non limitatif, les protubérances 202 occupent au moins 30% du marquage 20. Selon d'autres modes de réalisation non limitatifs, les protubérances 202 occupent 50% voire plus de 70% du marquage 20.

Par ailleurs, dans un mode de réalisation non limitatif, les protubérances 202 ont une hauteur Hc au moins égale à 0,1mm. Dans une variante de réalisation non limitative, la hauteur Hc est comprise entre 0,2 mm et 0,6 mm.

Les éléments en protubérance 202 correspondent au négatif des parties sombres 50. Autrement dit, une pluralité d'éléments en protubérance 202 correspond au négatif d'une case sombre 50.

Les éléments en protubérances 202 permettent de réaliser une texture formant les parties sombres 50 qui présente des premiers éléments en creux 113 (appelés également trous) tel qu'illustré sur la **figure 13****.**

Les éléments en creux 113 sont composés d'ouvertures 114 sur la surface du flanc 10 et de cavités 115 associées s'étendant dans la profondeur de la surface du flanc 10. Les ouvertures 114 se prolongent dans la profondeur de la surface du flanc 10 pour former des cavités 115.

Les cavités 115 sont en forme de cônes et ont une section qui diminue dans la profondeur de la surface du flanc 10. De cette manière, on améliore le contraste de la texture et donc du symbole matriciel codé 5 par rapport au reste du pneumatique 1 et plus particulièrement par rapport au reste du flanc 10. On notera que dans cette variante, les ouvertures 114 des cavités 115 ne se touchent pas. Les ouvertures 114 sont séparées par des zones intermédiaires 116. En outre, les ouvertures 114 sont régulièrement réparties dans la texture de sorte que la distance d entre chaque ouverture de la texture est globalement similaire. On notera que plus le taux d'occupation des ouvertures sur la texture est important, meilleure est la qualité de contraste de cette texture et donc des parties sombres 50 du symbole matriciel codé 4 par rapport aux parties claires 51 et au reste du flanc 10.

L'effet de ces cavités 115 est de « piéger » une grande quantité des rayons lumineux incidents qui rencontrent la texture, mais également d'offrir une plus grande pérennité de la texture. En effet, comme les cavités 115 sont en creux dans la surface du flanc 10, l'impact des agressions mécaniques sur la texture, tels que des frottements d'une chaussée est plus faible que pour des protubérances. Dans ce mode de réalisation, la texture (appelée « velours ») permet d'obtenir un visuel de type « velours » car les cavités absorbent la lumière et rendent ainsi les parties sombres 50 du symbole matriciel codé 5 plus noires.

Après avoir décrit la réalisation des parties sombres 50 du symbole matriciel codé 5, la suite de la description décrit la réalisation des parties claires 51 du symbole matriciel codé 5.

Dans un premier mode de réalisation non limitatif, l'élément de moule 2 en lui-même permet de réaliser les parties claires 51. En effet, dans ce cas, les parties claires 51 sont composées d'une partie de la surface du flanc 10 qui n'a pas été recouverte par la texture de type « velours » décrite précédemment, partie de la surface du flanc délimitée par l'espace occupé par le symbole matriciel codé 5. En effet, la surface du flanc 10 est lisse et elle réfléchit la lumière. Un observateur du pneumatique va percevoir une couleur gris-blanc. Ainsi, les parties claires 51 seront en contraste par rapport aux parties sombres 50 décrites précédemment.

Dans un deuxième mode de réalisation non limitatif illustré sur la **figure 14****,** le marquage 20 comporte un deuxième ensemble de protubérances 203 faisant saillie avec ledit élément de moule 2 et adapté pour mouler les parties claires 51 du symbole matriciel codé 5 et lesdites protubérances 203 ont la forme de calottes sphériques, chaque élément en protubérance 203 étant interpénétré 20 avec plusieurs éléments en protubérance adjacents. Ainsi, ces protubérances 203 correspondent au négatif des parties claires 51. Autrement dit, une pluralité de protubérances 203 correspond au négatif d'une case claire 51.

Par « élément en protubérance interpénétré avec d'autres éléments en protubérance adjacents », on entend que la calotte sphérique formée par l'élément en protubérance est interrompue par les autres éléments en protubérance adjacents, de sorte que, la distance entre le sommet de la calotte sphérique et le sommet d'un autre élément en protubérance adjacent est inférieur au diamètre de cette calotte sphérique.

Les deuxièmes éléments en protubérances 203 permettent de réaliser un motif formant les parties claires 51 qui présente des éléments en creux 117 tel qu'illustré sur la **figure 15****.** Les deuxièmes éléments en creux 117 ont tous la même forme. La forme est une surface ouverte. La forme est une partie de sphère. Dans le mode de réalisation non limitatif illustré, les deuxièmes éléments en creux 117 sont alignés les uns par rapport aux autres. Ceci permet de bien délimiter les parties claires 51. Chaque deuxième élément en creux 117 est adjacent avec un autre deuxième élément en creux 117. De plus, les deuxièmes éléments en creux 411 se raccordent entre eux au niveau de zones de raccordement 118.

Dans un troisième mode de réalisation illustré sur la **figure 16****,** le marquage 20 comporte un ensemble de creux 204 adapté pour mouler les parties claires 51 du symbole matriciel codé 5 et lesdits creux 204 ont la forme de calottes sphériques concaves.

Les creux 204 permettent de réaliser un motif formant les parties claires 51 qui présente des éléments en bosse 119 tel qu'illustré sur la **figure 17****.** Les éléments en bosse 119 ont tous la même forme. La forme est une surface fermée. La forme est une calotte sphérique, également appelée coque ou microlentille. Dans le mode de réalisation non limitatif illustré, les éléments en bosse 119 sont alignés les uns par rapport aux autres. Ceci permet de bien délimiter les parties claires 51. La forme géométrique des éléments en bosse 119 est ainsi convexe. Chaque calotte sphérique 119 est interpénétrée avec plusieurs éléments en bosse adjacents.

Dans un quatrième mode de réalisation non limitatif (non illustré), le marquage 20 comporte une combinaison de deuxièmes éléments en protubérance 203 et de creux 204 de façon à réaliser une combinaison d'éléments en creux 117 et d'éléments en bosses 119.

Ainsi, les parties claires 51 sont composées d'un motif comprenant :
- une pluralité d'éléments en creux 117 ; ou
- une pluralité d'éléments en bosse 119 ; ou
- une combinaison d'éléments en creux 117 et d'éléments en bosse 119.
Autrement dit, une case claire 51 comporte une pluralité d'éléments 117 et/ou 119. Cela permet de rendre encore plus claires les parties 51 que la surface lisse du flanc 10. Le motif est également venu de matière avec ledit flanc 10. Il est dans le même matériau caoutchoutique que le flanc du pneumatique. Les éléments 117 et 119 sont donc en matière caoutchoutique.

Ainsi, grâce à ces deuxièmes éléments en creux 117/en bosse 119, le symbole matriciel codé 5 comporte des parties 51 qui apparaissent plus claires pour un observateur du pneumatique 1 que les parties sombres 50 et donc bien distinctes par rapport à ces parties sombres 50. Cela facilite la lecture/décodage du symbole matriciel codé 5.

Afin d'obtenir un procédé de fabrication facile à mettre en œuvre, dans un mode de réalisation non limitatif, la densité d'éléments en creux 117 et d'éléments en bosse 119 dans le motif est supérieure ou égale à 0,2 éléments par mm².

Le procédé dé fabrication de l'élément de moule 2 pour moule 3 de pneumatique ainsi que de son marquage 20 est décrit ci-dessous en référence à la **figure 18****.**

Ledit procédé P comporte :
- l'extraction dudit élément de moule 2 à partir d'une plaque d'aluminium (étape 1 illustrée EXT_E(2)) ;
- la réalisation du marquage 20 destiné à mouler sur le pneumatique 1 le symbole matriciel codé 5 faisant contraste avec le flanc 10 du pneumatique 1, ledit symbole matriciel codé 5 comportant des parties sombres 50 et des parties claires 51, la réalisation dudit marquage 20 comprenant :
- la réalisation d'une partie du marquage 20 adaptée pour mouler les parties claires 51 du symbole matriciel codé 5 dans ledit élément de moule 2 (étape 2 illustrée MA_PC(2)) ; et
- la réalisation d'une partie du marquage 20 adaptée pour mouler les parties sombres 50 du symbole matriciel codé 5 dans ledit élément de moule 2 (étape 3 illustrée MA_PS(2)).

On notera que l'on peut extraire une ou plusieurs plaquettes 2 simultanément à partir d'une plaque d'aluminium. Par ailleurs, dans des modes de réalisation non limitatifs, l'extraction se fait par un procédé d'emboutissage ou de détourage.

Dans un premier mode de réalisation non limitatif, la réalisation du négatif des parties claires 51 (étape 2) et la réalisation du négatif des parties sombres 50 (étape 3) s'effectue de façon séquentielle. Ainsi, on effectue d'abord le négatif (à savoir les deuxièmes éléments en protubérances 203 ou l'ensemble de creux 204 vus précédemment) des parties claires 51, puis le négatif (à savoir le premier ensemble de cavités 201 ou de protubérances 202 vus précédemment) des parties sombres 50. Les cases claires 51 sont ainsi réalisées avant les cases sombres 50.

Dans une première variante de réalisation non limitative, la réalisation du marquage adapté pour mouler les parties claires 51 du symbole matriciel codé 5 dans ledit élément de moule 2 s'effectue après l'extraction dudit élément de moule 2 à partir d'une plaque d'aluminium.

Dans une deuxième variante de réalisation non limitative, la réalisation du marquage adapté pour mouler les parties claires 51 du symbole matriciel codé 5 dans ledit élément de moule 2 s'effectue avant l'extraction dudit élément de moule 2 à partir d'une plaque d'aluminium. La réalisation est ainsi plus rapide.

Dans un deuxième mode de réalisation non limitatif, les étapes de réalisation des parties du marquage 20 adaptées pour mouler les parties claires 51 (étape 2) et les parties sombres 50 (étape 3) du symbole matriciel codé 5 dans ledit élément de moule 2 sont effectuées simultanément par emboutissage dudit élément de moule 2.

Cela permet d'obtenir un procédé de fabrication peu coûteux pour réaliser des symboles matriciels codés en très grande série.

La réalisation de la partie du marquage 20 adaptée pour mouler les parties claires 51 du symbole matriciel codé 5 (étape 2) s'effectue :
- par microbillage du deuxième ensemble de protubérances 203 faisant saillie avec ledit élément de moule 2 pour former le marquage 20 du symbole matriciel codé 5 de sorte que lesdites protubérances 203 aient la forme de calottes sphériques, chaque élément en protubérance 203 étant interpénétré dans le marquage 20 avec plusieurs éléments en protubérance adjacents, le deuxième ensemble de protubérances 203 étant adapté pour mouler lesdites parties claires 51 du symbole matriciel codé 5 (opération illustrée MC_P (203)) ; ou
- par moulage de l'ensemble de creux 204 dans ledit élément de moule 2 de sorte que lesdits creux 204 aient la forme de calottes sphériques et soient adaptées pour mouler lesdites parties claires 51 du symbole matriciel codé 5 (opération illustrée MO_C (204)).

Dans un mode de réalisation non limitatif, le microbillage réalise des microbilles de diamètre compris entre 10µm et 200µm. Dans une variante de réalisation non limitative, le diamètre est de 50µm.

Par ailleurs, la réalisation de la partie du marquage 20 adaptée pour mouler les parties sombres 50 du symbole matriciel codé 5 dans ledit élément de moule 2 (étape 3) est effectuée en réalisant un premier ensemble de cavités 201 ou de protubérances 202 dans ledit élément de moule 2 correspondant aux parties sombres 50 du symbole matriciel codé 5, la réalisation du premier ensemble de cavités 201 dans ledit élément de moule 2 étant effectuée par gravure au laser (opération illustrée GR_C(201)) et la réalisation du premier ensemble de protubérances 202 dans ledit élément de moule 2 étant effectuée par moulage (opération illustrée MO_P(202)).

L'invention n'est pas limitée aux exemples décrits et représentés et diverses modifications peuvent y être apportées sans sortir de son cadre.

Ainsi, l'invention a été décrite avec un marquage 20. Cependant, dans un autre exemple de réalisation non limitatif, l'élément de moule 2 peut comporter plusieurs marquages 20 de sorte à réaliser plusieurs symboles matriciels codés 5 sur le flanc 10 du pneumatique 10.

Ainsi, selon un autre mode de réalisation non limitatif, l'opération de microbillage peut être remplacée par une opération de déformation plastique pour constituer des microlentilles, par exemple par emboutissage, moletage, repoussage etc.

Ainsi, selon un autre mode de réalisation non limitatif, l'opération de gravure des cases sombres 51 peut être réalisée non pas au laser, mais par usinage mécanique ou par poinçonnage (déformation plastique).

L'invention décrite présente notamment les avantages suivants :
- la fabrication du symbole matriciel codé 5 peut être intégrée lors de la fabrication du pneumatique 1 au moyen d'un moule intégré, et non pas après la fabrication du pneumatique. La réalisation est ainsi simplifiée et le coût est réduit ;
- cela permet de réaliser une composition du symbole matriciel codé 4 avec une texture type « velours » venue de matière avec le flanc du pneumatique pour les parties sombres 50 et avec des deuxièmes éléments en creux/en bosse pour les parties claires 51.

## Revendications

1. Elément de moule (2) pour moule (3) de pneumatique (1) comportant un marquage (20), ledit moule (3) comportant une coquille (4) destinée à mouler le flanc (10) du pneumatique (1), **caractérisé en ce que** ledit élément de moule (2) est une plaquette amovible destinée à être montée dans un logement (40) de ladite coquille (4), **et en ce que** ledit marquage (20) est destiné à mouler sur ledit pneumatique (1) un symbole matriciel codé (5) faisant contraste avec le flanc (10) du pneumatique (1), ledit symbole matriciel codé (5) comportant des parties sombres (50) et des parties claires (51), ledit marquage (20) comportant un premier ensemble de cavités (201) ou de protubérances (202) adapté pour mouler les parties sombres (50) du symbole matriciel codé (5) **et en ce que** les cavités du premier ensemble de cavités (201) ont une forme conique et sont réparties dans le marquage (20) selon une densité au moins égale à un cône par millimètre carré (mm²), chaque cône (201) ayant une section moyenne comprise entre 0,0005 mm² et 1 mm², ou ont une forme de stries sensiblement parallèles entre elles, le pas des stries étant au plus égal à 0,5 mm, chaque strie (201) ayant une largeur moyenne comprise entre 0,02 mm et 0,25 mm **et en ce que** le marquage (20) comporte un deuxième ensemble de protubérances (203) faisant saillie avec ledit élément de moule (2) adapté pour mouler des parties claires (51) du symbole matriciel codé (5) **et en ce que** lesdites protubérances (203) ont la forme de calottes sphériques, chaque élément en protubérance (203) étant interpénétré (20) avec plusieurs éléments en protubérance adjacents **et/ou en ce que** le marquage (20) comporte un ensemble de creux (204) adapté pour mouler des parties claires (51) du symbole matriciel codé (5) **et en ce que** lesdits creux (204) ont la forme de calottes sphériques adaptées pour mouler des éléments en bosse (119), chaque élément en bosse (119) étant interpénétré avec plusieurs éléments en bosse adjacents.

2. Elément de moule (2) selon la revendication 1, **caractérisé en ce que** ledit élément de moule (2) comporte un deuxième ensemble de cavités (205) adapté pour mouler une zone de délimitation (52) du symbole matriciel codé (5).

3. Elément de moule (2) selon l'une des revendications 1 ou 2, **caractérisé en ce que** les protubérances du premier ensemble de protubérances (202) ont une forme conique et sont réparties dans le marquage (20) selon une densité au moins égale à une protubérance par millimètre carré (mm²), ces protubérances présentant des diamètres équivalents compris entre 0,01 mm et 1,2 mm.

4. Elément de moule (2) selon l'une quelconque des revendications 1 à 3, **caractérisé en ce que** la plaquette amovible est en aluminium.

5. Moule (6) pour pneumatique (1) comportant une coquille (4) destinée à mouler le flanc (10) du pneumatique (1), **caractérisé en ce que** ladite coquille (4) comporte un logement (40) dans lequel est monté un élément de moule (2) caractérisé selon l'une quelconque des revendications précédentes.

6. Procédé de fabrication (P) d'un élément de moule (2) pour moule (3) de pneumatique (1), ledit moule (3) comportant une coquille (4) destinée à mouler le flanc (10) du pneumatique (1), ledit élément de moule (2) étant une plaquette amovible destinée à être montée dans un logement (40) de ladite coquille (4) et comportant un marquage (20), **caractérisé en ce que** ledit procédé (P) comporte :
- l'extraction dudit élément de moule (2) à partir d'une plaque d'aluminium ;
- la réalisation du marquage (20) destiné à mouler sur le pneumatique (1) un symbole matriciel codé (5) faisant contraste avec le flanc (10) du pneumatique (1), ledit symbole matriciel codé (5) comportant des parties sombres (50) et des parties claires (51), la réalisation dudit marquage (20) comprenant :
- la réalisation du marquage adapté pour mouler les parties claires (51) du symbole matriciel codé (5) dans ledit élément de moule (2) ; et
- la réalisation du marquage adapté pour mouler les parties sombres (50) du symbole matriciel codé (5) dans ledit élément de moule (2)
et **en ce que** la réalisation du marquage adapté pour mouler les parties claires (51) du symbole matriciel codé (5) s'effectue :
- par microbillage d'un deuxième ensemble de protubérances (203) faisant saillie avec ledit élément de moule (2) pour former le marquage (20) du symbole matriciel codé (5) de sorte que lesdites protubérances (203) aient la forme de calottes sphériques, chaque élément en protubérance (203) étant interpénétré dans le marquage (20) avec plusieurs éléments en protubérance adjacents, le deuxième ensemble de protubérances (203) étant adapté pour mouler lesdites parties claires (51) du symbole matriciel codé (5) ; ou
- par moulage d'un ensemble de creux (204) ayant la forme de calotte sphérique, ledit ensemble de creux (204) étant adapté pour mouler lesdites parties claires (51) du symbole matriciel codé (5)
et **en ce que** la réalisation du marquage (20) adapté pour mouler les parties sombres (50) du symbole matriciel codé (5) dans ledit élément de moule (2) est effectuée en réalisant un premier ensemble de cavités (201) ou de protubérances (202) dans ledit élément de moule (2) adapté pour mouler lesdites parties sombres (50) du symbole matriciel codé (5), la réalisation du premier ensemble de cavités (201) dans ledit élément de moule (2) étant effectuée par gravure au laser et la réalisation du premier ensemble de protubérances (202) dans ledit élément de moule (2) étant effectuée par moulage.

7. Procédé de fabrication selon la revendication précédente 6, **caractérisé en ce que** les étapes de réalisation du marquage adapté pour mouler les parties claires (51) et les parties sombres (50) du symbole matriciel codé (5) dans ledit élément de moule (2) sont effectuées simultanément par emboutissage dudit élément de moule (2).

8. Procédé de fabrication selon la revendication précédente 6, **caractérisé en ce que** la réalisation du marquage adapté pour mouler les parties claires (51) du symbole matriciel codé (5) dans ledit élément de moule (2) s'effectue avant l'extraction dudit élément de moule (2) à partir de la plaque d'aluminium.

9. Procédé de fabrication selon la revendication 6, **caractérisé en ce que** le microbillage réalise des microbilles de diamètre compris entre 10µm et 200µm.

## Patentansprüche

1. Formelement (2) für eine Form (3) für einen Reifen (1), aufweisend eine Markierung (20), wobei die Form (3) eine Schale (4) zur Formung der Flanke (10) des Reifens (1) aufweist, **dadurch gekennzeichnet, dass** das Formelement (2) ein abnehmbares Plättchen ist, das dazu bestimmt ist, in einer Aufnahme (40) der Schale (4) angebracht zu sein, und dadurch, dass die Markierung (20) dazu bestimmt ist, auf den Reifen (1) ein codiertes Matrixsymbol (5) zu formen, das einen Kontrast zur Flanke (10) des Reifens (1) bildet, wobei das codierte Matrixsymbol (5) dunkle Abschnitte (50) und helle Abschnitte (51) aufweist, wobei die Markierung (20) eine erste Anordnung von Vertiefungen (201) oder Vorsprüngen (202) aufweist, die geeignet ist, die dunklen Abschnitte (50) des codierten Matrixsymbols (5) zu formen, und dadurch, dass die Vertiefungen der ersten Anordnung von Vertiefungen (201) eine Kegelform aufweisen und in der Markierung (20) gemäß einer Dichte von mindestens gleich einem Kegel pro Quadratmillimeter (mm²) verteilt sind, wobei jeder Kegel (201) einen mittleren Querschnitt zwischen 0,0005 mm² und 1 mm² aufweist, oder eine Form von Rillen aufweisen, die im Wesentlichen parallel zueinander verlaufen, wobei der Abstand der Rillen höchstens gleich 0,5 mm ist, wobei jede Rille (201) eine mittlere Breite zwischen 0,02 mm und 0,25 mm aufweist, und dadurch, dass die Markierung (20) eine zweite Anordnung von Vorsprüngen (203) aufweist, die mit dem Formelement (2) hervorstehen, die geeignet ist, helle Abschnitte (51) des codierten Matrixsymbols (5) zu formen, und dadurch, dass die Vorsprünge (203) die Form von Kugelkappen aufweisen, wobei jedes hervorstehende Element (203) mit mehreren benachbarten hervorstehenden Elementen gegenseitig durchdrungen (20) ist, und/oder dadurch, dass die Markierung (20) eine Anordnung von Höhlungen (204) aufweist, die geeignet ist, helle Abschnitte (51) des codierten Matrixsymbols (5) zu formen, und dadurch, dass die Höhlungen (204) die Form von Kugelkappen aufweisen, die geeignet sind, gewölbte Elemente (119) zu formen, wobei jedes gewölbte Element (119) mit mehreren benachbarten gewölbten Elementen gegenseitig durchdrungen ist.

2. Formelement (2) nach Anspruch 1, **dadurch gekennzeichnet, dass** das Formelement (2) eine zweite Anordnung von Vertiefungen (205) aufweist, die geeignet ist, einen Bereich zur Begrenzung (52) des codierten Matrixsymbols (5) zu formen.

3. Formelement (2) nach einem der Ansprüche 1 oder 2, **dadurch gekennzeichnet, dass** die Vorsprünge der ersten Anordnung von Vorsprüngen (202) eine Kegelform aufweisen und in der Markierung (20) gemäß einer Dichte von mindestens gleich einem Vorsprung pro Quadratmillimeter (mm²) verteilt sind, wobei diese Vorsprünge gleichwertige Durchmesser zwischen 0,01 mm und 1,2 mm aufweisen.

4. Formelement (2) nach einem der Ansprüche 1 bis 3, **dadurch gekennzeichnet, dass** das abnehmbare Plättchen aus Aluminium ist.

5. Form (6) für einen Reifen (1) aufweisend eine Schale (4) zur Formung der Flanke (10) des Reifens (1), **dadurch gekennzeichnet, dass** die Schale (4) eine Aufnahme (40) aufweist, in der ein Formelement (2) angebracht ist, das nach einem der vorhergehenden Ansprüche gekennzeichnet ist.

6. Verfahren zur Herstellung (P) eines Elements (2) für eine Form (3) für einen Reifen (1), wobei die Form (3) eine Schale (4) zur Formung der Flanke (10) des Reifens (1) aufweist, wobei das Formelement (2) ein abnehmbares Plättchen ist, das dazu bestimmt ist, in einer Aufnahme (40) der Schale (4) angebracht zu sein und eine Markierung (20) aufweist, **dadurch gekennzeichnet, dass** das Verfahren (P) Folgendes aufweist:
- Extrahieren des Formelements (2) aus einer Aluminiumplatte;
- Erstellen der Markierung (20) zur Formung eines codierten Matrixsymbols (5) auf dem Reifen (1), das einen Kontrast zur Flanke (10) des Reifens (1) bildet, wobei das codierte Matrixsymbol (5) dunkle Abschnitte (50) und helle Abschnitte (51) aufweist, wobei das Erstellen der Markierung (20) Folgendes umfasst:
- das Erstellen der Markierung, die geeignet ist, die hellen Abschnitte (51) des codierten Matrixsymbols (5) im Formelement (2) zu formen; und
- das Erstellen der Markierung, die geeignet ist, die dunklen Abschnitte (50) des codierten Matrixsymbols (5) im Formelement (2) zu formen
und dadurch, dass das Erstellen der Markierung, die geeignet ist, die hellen Abschnitte (51) des codierten Matrixsymbols (5) zu formen, folgendermaßen erfolgt:
- durch Kugelstrahlen einer zweiten Anordnung von Vorsprüngen (203), die mit dem Formelement (2) hervorstehen, um die Markierung (20) des codierten Matrixsymbols (5) zu formen, so dass die Vorsprünge (203) die Form von Kugelkappen aufweisen, wobei jedes hervorstehende Element (203) in der Markierung (20) mit mehreren benachbarten hervorstehenden Elementen gegenseitig durchdrungen ist, wobei die zweite Anordnung von Vorsprüngen (203) geeignet ist, die hellen Abschnitte (51) des codierten Matrixsymbols (5) zu formen; oder
- durch Formung einer Anordnung von Höhlungen (204), die die Form von Kugelkappen aufweisen, wobei die Anordnung von Höhlungen (204) geeignet ist, die hellen Abschnitte (51) des codierten Matrixsymbols (5) zu formen und dadurch, dass die Erstellung der Markierung (20), die geeignet ist, die dunklen Abschnitte (50) des codierten Matrixsymbols (5) im Formelement (2) zu formen, durchgeführt wird, indem eine erste Anordnung von Vertiefungen (201) oder Vorsprüngen (202) im Formelement (2) erstellt wird, die geeignet ist, die dunklen Abschnitte (50) des codierten Matrixsymbols (5) zu formen, wobei die Erstellung der ersten Anordnung von Vertiefungen (201) im Formelement (2) durch Lasergravieren und die Erstellung der ersten Anordnung von Vorsprüngen (202) im Formelement (2) durch Formen durchgeführt wird.

7. Herstellungsverfahren nach dem vorhergehenden Anspruch 6, **dadurch gekennzeichnet, dass** die Schritte zur Erstellung der Markierung, die geeignet ist, die hellen Abschnitte (51) und die dunklen Abschnitte (50) des codierten Matrixsymbols (5) im Formelement (2) zu formen, gleichzeitig durch Tiefziehen des Formelements (2) durchgeführt werden.

8. Herstellungsverfahren nach dem vorhergehenden Anspruch 6, **dadurch gekennzeichnet, dass** das Erstellen der Markierung, die geeignet ist, die hellen Abschnitte (51) des codierten Matrixsymbols (5) im Formelement (2) zu formen, vor dem Extrahieren des Formelements (2) aus der Aluminiumplatte erfolgt.

9. Herstellungsverfahren nach Anspruch 6, **dadurch gekennzeichnet, dass** das Kugelstrahlen Mikrokugeln mit einem Durchmesser zwischen 10 µm und 200 µm ausbildet.

## Claims

1. Mould element (2) for a mould (3) for a tyre (1) comprising a marking (20), the said mould (3) comprising a shell (4) intended to mould the sidewall (10) of the tyre (1), **characterized in that** the said mould element (2) is a removable insert intended to be mounted in a housing (40) of the said shell (4), **and in that** the said marking (20) is intended to mould on the said tyre (1) a coded matrix symbol (5) that contrasts with the sidewall (10) of the tyre (1), the said marking (20) comprising a first set of cavities (201) or of protuberances (202) which is designed to mould dark parts (50) of the coded matrix symbol (5) **and in that** the cavities of the first set of cavities (201) have a conical shape and are distributed through the marking (20) at a density at least equal to one cone per square millimetre (mm²), each cone (201) having a mean cross section comprised between 0.0005 mm² and 1 mm², or have a form of substantially mutually parallel striations, the spacing of the striations being at most equal to 0.5 mm, each striation (201) having a mean width comprised between 0.02 mm and 0.25 mm **and in that** the marking (20) comprises a second set of protuberances (203) projecting from the said mould element (2) and designed to mould light parts (51) of the coded matrix symbol (5) **and in that** the said protuberances (203) have the shape of caps of a sphere, each protruding element (203) being interpenetrated (20) by several adjacent protruding elements **and/or in that** the marking (20) comprises a set of set-back recesses (204) designed to mould light parts (51) of the coded matrix symbol (5) and **in that** the said set-back recesses (204) have the shape of caps of a sphere designed to mould boss elements (119), each boss elements (119) being interpenetrated by several adjacent boss elements.

2. Mould element (2) according to Claim 1, **characterized in that** the said mould element (2) comprises a second set of cavities (205) designed to mould a demarcation zone (52) delineating the coded matrix symbol (5).

3. Mould element (2) according to any one of Claims 1 or 2, **characterized in that** the protuberances of the first set of protuberances (202) have a conical shape and are distributed through the marking (20) at a density at least equal to one protuberance per square millimetre (mm²), these protuberances having equivalent diameters comprised between 0.01 mm and 1.2 mm.

4. Mould element (2) according to any one of Claims 1 to 3, **characterized in that** the removable insert is mad of aluminium.

5. Mould (6) for a tyre (1) comprising a shell (4) intended to mould the sidewall (10) of the tyre (1), **characterized in that** the said shell (4) comprises a housing (40) in which is mounted a mould element (2) characterized according to any one of the preceding claims.

6. Method (P) of manufacturing a mould element (2) for a mould (3) for a tyre (1), the said mould (3) comprising a shell (4) intended to mould the sidewall (10) of the tyre (1), the said mould element (2) being a removable insert intended to be mounted in a housing (40) of the said shell (4) and comprising a marking (20), **characterized in that** the said method (P) comprises:
- extraction of the said mould element (2) from a sheet of aluminium ;
- creation of the marking (20) intended to mould, on the tyre (1), a coded matrix symbol (5) that contrasts with the sidewall (10) of the tyre (1), the said coded matrix symbol (5) comprising dark parts (50) and light parts (51), the creation of the said marking (20) comprising:
- the creation of the marking suited to moulding the light parts (51) of the coded matrix symbol (5) in the said mould element (2); and
- the creation of the marking suited to moulding the dark parts (50) of the coded matrix symbol (5) in the said mould element (2).
**and in that** the creation of the marking suited to moulding the light parts (51) of the coded matrix symbol (5) is carried out:
- by micro shot peening of the second set of protuberances (203) projecting from the said mould element (2) to form the marking (20) of the coded matrix symbol (5) so that the said protuberances (203) have the shape of caps of a sphere, each protruding element (203) being interpenetrated in the marking (20) by several adjacent protruding elements, the second set of protuberances (203) being suited to moulding the said light parts (51) of the coded matrix symbol (5); or
- by moulding of a set-back set of recesses (204) having the shape of caps of a sphere, the said set of recesses (204) being suited to moulding the said light parts (51) of the coded matrix symbol (5)
**and in that** the creation of the marking (20) suited to moulding the dark parts (50) of the coded matrix symbol (5) in the said mould element (2) is performed by creating a first set of cavities (201) or of protuberances (202) in the said mould element (2) suited to moulding the said dark parts (50) of the coded matrix symbol (5), the creation of the first set of cavities (201) in the said mould element (2) being carried out by laser etching and the creation of the first set of protuberances (202) in the said mould element (2) being performed by moulding.

7. Method of manufacture according to the preceding Claim 6, **characterized in that** the steps of creating the marking suited to moulding the light parts (51) and the dark parts (50) of the coded matrix symbol (5) in the said mould element (2) are performed simultaneously by pressing the said mould element (2).

8. Method of manufacture according to the preceding Claim 6, **characterized in that** the creation of the marking suited to moulding the light parts (51) of the coded matrix symbol (5) in the said mould element (2) is performed before the extraction of the said mould element (2) from the sheet of aluminium.

9. Method of manufacture according to the Claim 6 **characterized in that** the micro shot peening creates microbeads of a diameter comprised between 10 µm and 200 µm.
